# EUROPÄISCHE PATENTSCHRIFT

(11) **EP 2 675 030 B1**
(45) Veröffentlichungstag und Bekanntmachung des Hinweises auf die Patenterteilung: **01.03.2017**
(21) Anmeldenummer: 12004473.0
(22) Anmeldetag: 13.06.2012
(51) Int. Cl.: H02G 13/00

(54) **Strukturbauteil für ein Windenergieanlagenrotorblatt mit einem Blitzschutzleiter**
Structural component for a wind turbine rotor blade with a lightning protection conductor
Composant de structure pour une pale de rotor d'éolienne avec un conducteur de paratonnerre

(43) Veröffentlichungstag der Anmeldung: 18.12.2013
(73) Patentinhaber: Nordex Energy GmbH, 22419 Hamburg (DE)
(72) Erfinder: Frankowski, Marco, 18347 Ostseebad Wustrow (DE); Austinat, Dirk, 17126 Jarmen (DE)
(74) Vertreter: Hauck Patentanwaltspartnerschaft mbB

(56) Entgegenhaltungen:
- WO-A2-2010/034755
- DE-A1- 19 826 086
- DE-A1-102008 002 849
- DE-A1-102008 002 961

## Beschreibung

Die Erfindung betrifft ein Strukturbauteil für ein Windenergieanlagenrotorblatt, wobei das Strukturbauteil einen Blitzschutzleiter aufweist.

Windenergieanlagenrotorblätter sind häufig von einem Blitzschlag betroffen, weil sie unabhängig von der Drehstellung des Rotors im Betrieb der Windenergieanlage immer den höchsten Punkt der Anlage bilden. Ein besonders hohes Risiko für Blitzschlag besteht in der umgekehrten Y-Stellung des Rotors, wenn ein Rotorblatt senkrecht nach oben zeigt. Es ist daher notwenig, die Rotorblätter mit einer Blitzschutzeinrichtung auszustatten. Diese besteht zumeist aus einem Blitzschutzrezeptor im Bereich der Blattspitze und einem Blitzschutzleiter, über den der Blitzstrom zu einer Rotornabe und dann über den Turm der Windenergieanlage in den Boden abgeleitet werden kann, ohne dass es zu Beschädigungen des Rotorblatts kommt. Um die Zuverlässigkeit des Blitzschutzes zu erhöhen und die Fertigung eines Rotorblatts mit einem Blitzschutzleiter zu vereinfachen, sind unterschiedliche Ansätze bekannt geworden, bei denen der Blitzschutzleiter in ein Strukturbauteil des Rotorblatts integriert oder an diesem befestigt wird.

So schlägt die Druckschrift EP 1 692 752 B1 vor, einen herkömmlichen Blitzschutzleiter zu verwenden und mit unterschiedlichen, elektrisch leitfähigen Komponenten des Rotorblatts über ein Potentialausgleichsglied zu verbinden, um einen Überschlag zwischen den Komponenten und/oder einer der Komponenten und dem Blitzschutzleiter zu verhindern.

Aus der Druckschrift WO 2009/153341 A2 ist bekannt geworden, einen herkömmlichen Blitzschutzleiter seitlich an einem Holm des Rotorblatts entlang zu führen und mittels dünner Kupferplatten mit zwei kappenförmigen Trägern des Holms elektrisch zu verbinden.

Aus der Druckschrift EP 2 110 552 A1 ist bekannt, bei der Herstellung eines Windenergieanlagenrotorblatts in einem Vakuuminfusionsverfahren einen flachen, geflochtenen Blitzschutzleiter gemeinsam mit einem Fasermaterial in der Herstellungsform anzuordnen. Nach dem Aushärten eines Kunststoffmaterials verläuft der Blitzschutzleiter entlang eines Stegs des Rotorblatts.

Aus der Druckschrift DE 10 2010 017 062 A1 ist bekannt geworden, ein Rotorblatt aus einem kohlenstofffaserverstärkten Kunststoffmaterial herzustellen und in die Kunststoffmatrix Metalleinlegeteile einzubetten. Die Metalleinlegeteile sind mit Löchern versehene, streifenförmige Stahlprofile. Wegen des hohen Elastizitätsmoduls des Stahls soll der Kohlenstofffaseranteil des faserverstärkten Kunststoffmaterials reduziert werden können. Zusätzlich sollen die Stahleinlegeteile als integrierter Blitzschutz dienen.

Aus der Druckschrift EP 2 375 066 A1 ist ein Gehäuse für die Gondel einer Windenergieanlage bekannt geworden. Das Gehäuse weist einen selbst tragenden Rahmen auf. An dem Rahmen werden Abdeckplatten aus Kunststoff befestigt. In einer Ausgestaltung werden statt der Kunststoffplatten Aluminiumplatten, die im Inneren einen Aluminiumschaum aufweisen, verwendet. Derartige Aluminiumplatten sollen eine besonders hohe Steifigkeit aufweisen.

Druckschrift DE 10 2008 002 849 A1 beschreibt ein Windenergieanlagenrotorblatt, das teilweise aus einem metallischen oder polymerischen Schaum besteht. Der Schaum bildet einen Abschnitt einer exponierten Oberfläche, wodurch eine Geräuschreduktion erreicht werden soll.

Aus der Druckschrift DE 198 26 086 A1 ist ein Windenergieanlagenrotorblatt bekannt geworden, das hauptsächlich aus nichtleitendem Kunststoff besteht. Als Blitzschutzeinrichtung ist ein Band aus leitfähigem Gewebe integriert. Außerdem gibt es einen Metallgitterkäfig, in den ein Hartschaumkern eingesetzt wird. Die gesamte Anordnung wird mit einem Kunststoffschaum umschäumt.

Aus der Druckschrift DE 10 2008 002 961 A1 ist ein Windenergieanlagenrotorblatt mit den Merkmalen des Oberbegriff des Anspruchs 1 bekannt geworden.

Aus der Druckschrift WO2010/034755 A2 ist ein Steg aus einem Verbundmaterial für ein Windenergieanlagenrotorblatt bekannt geworden. Das bekannte Verbundmaterial ist in Sandwichbauweise hergestellt und weist ein geschäumtes Kunststoffmaterial auf, das zwischen einer oberen und einer unteren Lage eines Verstärkungsfasermaterials angeordnet ist. Zwischen den beiden Lagen aus Verstärkungsfasern sollen Verbindungen aus einem Verstärkungsfasermaterial hergestellt werden. Außerdem kann das bekannte Verbundmaterial Einsätze aufweisen, die auf unterschiedliche Art und Weise zwischen den Lagen der Verstärkungsfasern angeordnet und aus unterschiedlichen Materialien gefertigt werden können.

Davon ausgehend ist es die Aufgabe der Erfindung, eine alternative Lösung für die Integration eines Blitzschutzleiters in einen Steg für ein Windenergieanlagenrotorblatt anzugeben.

Diese Aufgabe wird gelöst durch den Steg mit den Merkmalen des Anspruchs 1. Vorteilhafte Ausgestaltungen sind in den sich anschließenden Unteransprüchen angegeben.

Der Steg für ein Windenergieanlagenrotorblatt weist einen Blitzschutzleiter auf, der einen elektrisch leitfähigen Schaum aufweist.

Der Steg ist ein Strukturbauteil und ist für ein Windenergieanlagenrotorblatt bestimmt oder in ein solches eingebaut. Mit dem Begriff Strukturbauteil ist gemeint, dass das Bauteil einen Beitrag zur Aufrechterhaltung der gewünschten Struktur des Rotorblatts leistet.

Der Steg weist einen Blitzschutzleiter auf. Der Blitzschutzleiter ist dazu ausgebildet, die im Falle eines Blitzschlags fließenden, sehr hohen Ströme von beispielsweise 10 kA oder mehr beschädigungsfrei ableiten zu können. Der Blitzschutzleiter erstreckt sich insbesondere in einer Längsrichtung des Stegs. Zusätzlich zu dem Blitzschutzleiter kann der Steg mindestens eine weitere Komponente aufweisen. Der Blitzschutzleiter kann in den Steg integriert sein.

Bei der Erfindung weist der Blitzschutzleiter einen elektrisch leitfähigen Schaum auf. Der Blitzschutzleiter kann ausschließlich aus dem elektrisch leitfähigen Schaum bestehen, oder weitere elektrisch leitfähige Bestandteile einschließen. Der elektrisch leitfähige Schaum kann sich über einen Längsabschnitt, der einen Großteil der Gesamtlänge des Blitzschutzleiters ausmacht, oder über die gesamte Länge des Blitzschutzleiters im Steg erstrecken. Die Längsrichtung des Stegs kann einer Längsrichtung eines Windenergieanlagenrotorblatts, in das der Steg eingebaut ist oder wird, entsprechen. Der elektrisch leitfähige Schaum kann eine offen- oder geschlossenporige Struktur aufweisen. Die Poren können zum Beispiel luft- oder gasgefüllt sein. Der elektrisch leitfähige Schaum kann durch Aufschäumen eines elektrisch leitfähigen Materials hergestellt worden sein.

In einer Ausgestaltung weist der elektrisch leitfähige Schaum in einem Querschnitt quer zu einer Längsrichtung des Stegs eine Fläche von 100 mm² oder mehr auf. Die genannte Querschnittsfläche kann auch 200 mm² oder mehr, 500 mm² oder mehr oder 1.000 mm² oder mehr groß sein. Der Querschnitt kann eine beliebige Form aufweisen, insbesondere eine rechteckige. Die Verwendung eines elektrisch leitfähigen Schaums mit Querschnittsflächen der genannten Größe stellt eine ausreichende elektrische Leitfähigkeit des Blitzschutzleiters bereit. Die Verwendung großer Querschnittsflächen ermöglicht außerdem die Integration des elektrisch leitfähigen Schaums in den Steg derart, dass der elektrische leitfähige Schaum zusätzlich zur Bereitstellung des Blitzschutzleiters eine weitere Funktion für den Steg erfüllt, beispielsweise als Füll- oder Kernmaterial.

In einer Ausgestaltung weist der elektrisch leitfähige Schaum in einer Längsrichtung des Stegs eine elektrische Leitfähigkeit auf, die der elektrischen Leitfähigkeit eines massiven Kupferleiters mit einem Querschnitt von 10 mm² oder mehr entspricht. Insbesondere kann die elektrische Leitfähigkeit derjenigen eines massiven Kupferleiters mit einer Querschnittsfläche im Bereich von 30 mm² bis 80 mm² entsprechen. Auch durch diese Maßnahme wird eine zur Ableitung der auftretenden Ströme ausreichende Leitfähigkeit erzielt.

In einer weiteren Ausgestaltung ist der Steg scheiben- oder plattenförmig und weist zwei einander gegenüberliegende, ebene Flachseiten auf. Der Steg kann im Querschnitt insbesondere im Wesentlichen rechteckig ausgebildet sein. Der elektrisch leitfähige Schaum ist in die Scheiben- oder Plattenform des Stegs integriert, sodass die Ebenheit der beiden Flachseiten nicht wie bei herkömmlichen Konstruktionen durch den Blitzschutzleiter beeinträchtigt wird. Dadurch kann der Steg einfacher gehandhabt werden, insbesondere beim Einbau in ein Rotorblatt, denn an den ebenen Flachseiten können ohne weiteres Vakuumsauger oder sonstige Greif- oder Befestigungsmittel angeordnet werden. Außerdem verringert sich die Wahrscheinlichkeit einer Beschädigung des Blitzschutzleiters bei der Handhabung des Stegs.

Der Steg kann zur Verbindung mit zwei Rotorblatthalbschalen vorgesehen sein. Er kann insbesondere senkrecht stehend zwischen den beiden Halbschalen angeordnet und mit beiden Rotorblatthalbschalen verklebt sein. Der Steg kann ein vorgefertigtes Bauteil sein, das zum Beispiel in einem Vakuuminfusionsverfahren hergestellt wird. Der Steg kann im Wesentlichen scheiben- oder plattenförmig sein und sich über die gesamte Länge des Rotorblatts erstrecken. Der Steg kann Befestigungsabschnitteaufweisen, insbesondere einseitig oder beidseitig angeordnete Befestigungsflansche. Der Steg kann im Querschnitt C-förmig oder Doppel-T-förmig ausgebildet sein. Die Anordnung des den elektrisch leitfähigen Schaum aufweisenden Blitzschutzleitersinnerhalb eines Stegs für das Rotorblatt ist besonders sinnvoll, weil er sich in der Regel von der Blattwurzel bis nahe an die Blattspitze heran erstreckt und, wegen der hohen Festigkeitsanforderungen an den Steg, eine ausreichende Dicke aufweist, um den elektrisch leitfähigen Schaum mit der benötigten Querschnittsfläche problemlos aufnehmen zu können. Die Dicke des Stegs kann beispielsweise im Bereich von 20 mm bis 100 mm liegen.

In einer Ausgestaltung ist der Steg in Sandwichbauweise aus einem Kern und zwei Deckschichten hergestellt, wobei der Kern des Stegs den elektrisch leitfähigen Schaum aufweist. Bei derartigen Stegen in Sandwichbauweise nehmen die Deckschichten die auftretenden Lasten auf, während der dazwischen angeordnete Kern die Deckschichten in ihrer gewünschten Anordnung hält und eine Verformung der Deckschichten weitestgehend verhindert. Das Kernmaterial sollte die sich daraus ergebenden, relativ geringen Festigkeitsanforderungen erfüllen und gleichzeitig ein möglichst geringes spezifisches Gewicht aufweisen. Der elektrisch leitfähige Schaum ist als Kernmaterial gut geeignet, denn durch die aufgeschäumte Struktur weist er ein relativ geringes spezifisches Gewicht auf. Im Bereich des Blitzschutzleiters kann also der elektrisch leitfähige Schaum an die Stelle eines anderenfalls verwendeten, herkömmlichen Kernmaterials treten. Dies führt zu einer zusätzlichen Materialersparnis.

In einer Ausgestaltung weist der Kern zusätzlich zu dem elektrisch leitfähigen Schaum mindestens ein weiteres Kernmaterial auf. Als weitere Kernmaterialien kommen insbesondere geschäumte Materialien, wie zum Beispiel Schäume aus PET oder PVC oder sonstigen Kunststoffen in Betracht, aber auch Waben-, Gitter- oder Rippenstrukturen aus einer Vielzahl von Materialien oder natürliche Materialien wie zum Beispiel Balsaholz. Das mindestens eine weitere Kernmaterial bildet gemeinsam mit dem elektrisch leitfähigen Schaum den Kern des Stegs. Hierzu können der elektrisch leitfähige Schaum und das weitere Kernmaterial bei der Herstellung des Stegs miteinander verbunden, insbesondere verklebt werden. Um die Anordnung der unterschiedlichen Kernmaterialien bei der Herstellung des Stegs zu vereinfachen, können diese auch vorläufig miteinander zu einem sogenannten Kernkit kombiniert werden. Durch die Kombination des elektrisch leitfähigen Schaums mit mindestens einem weiteren Kernmaterial können die Eigenschaften des Kerns unterschiedlichen Anforderungen angepasst und die Herstellung des Stegs vereinfacht werden.

In einer Ausgestaltung ist der elektrisch leitfähige Schaum in einem Querschnitt durch den Steg mittig angeordnet und allseitig von einer der Deckschichten und/oder einem weiteren Kernmaterial umgeben. Die betrachtete Querschnittsebene kann insbesondere quer zu einer Längsrichtung des Stegs verlaufen. Dadurch kann eine Beschädigung des elektrisch leitfähigen Schaums unter Belastung des Stegs vermieden werden. Außerdem ist der elektrisch leitfähige Schaum bei der genannten Anordnung keinen korrosiven Einflüssen ausgesetzt.

In einer Ausgestaltung weist mindestens eine der Deckschichten ein faserverstärktes Kunststoffmaterial auf. Auch unabhängig von der Verwendung eines Stegs in Sandwichbauweise kann es sinnvoll sein, den elektrisch leitfähigen Schaum an mindestens einer Seite mit einem faserverstärkten Kunststoffmaterial zu umgeben. Das faserverstärkte Kunststoffmaterial kann wesentlich zur Festigkeit des Stegs beitragen. Außerdem schützt es den elektrisch leitfähigen Schaum vor Beschädigung.

In einer Ausgestaltung sind der elektrisch leitfähige Schaum und das Fasermaterial in eine Kunststoffmatrix eingebettet. Dies kann insbesondere durch Anordnen des elektrisch leitfähigen Schaums und des Fasermaterials sowie gegebenenfalls weiterer Komponenten in einer Herstellungsform erfolgen, in die ein flüssiges Kunststoffmaterial infundiert oder auf sonstige Weise eingebracht wird. Nach dem Aushärten des flüssigen Kunststoffmaterials sind der leitfähige Schaum und das Fasermaterial fest miteinander verbunden und gegenüber der Umgebung versiegelt. So entsteht ein Verbundwerkstoff mit dauerhaft stabilen Eigenschaften.

In einer Ausgestaltung erstreckt sich der elektrisch leitfähige Schaum bei bestimmungsgemäßer Verwendung des Stegs von einem Bereich nahe einer Blattwurzel des Rotorblatts bis zu einem Bereich nahe einer Blattspitze des Rotorblatts. In diesem Fall ist der elektrisch leitfähige Schaum im Wesentlichen über die gesamte Länge des Blitzschutzleiters des Rotorblatts für die elektrische Leitfähigkeit maßgeblich.

In einer Ausgestaltung weist der elektrisch leitfähige Schaum ein aufgeschäumtes Metall auf. Beispielsweise kann aufgeschäumtes Kupfer oder aufgeschäumtes Aluminium oder eine Mischung oder Legierung aus diesen beiden Metallen, auch mit einem oder mehreren weiteren Metallen oder sonstigen Materialien, verwendet werden. Schäume aus Kupfer und Aluminium weisen eine sehr hohe Leitfähigkeit bei gleichzeitig relativ geringem Gewicht auf.

In einer Ausgestaltung ist ein elektrisches Verbindungselement in den elektrisch leitfähigen Schaum eingesetzt. Das elektrische Verbindungselement dient zur Verbindung des elektrisch leitfähigen Schaums mit einem weiteren, für die Blitzableitung erforderlichen Gegenstand, insbesondere einem Blitzschutzrezeptor, der an einer Oberfläche des Windenergieanlagenrotorblatts, beispielsweise im Bereich der Blattspitze, angeordnet ist, oder mit einer sonstigen elektrischen Leitung zur Verbindung mit einem solchen Blitzschutzrezeptor und/oder mit einer sonstigen elektrischen Leitung, die beispielsweise in die Rotornabe und/oder in den Turm der Windenergieanlage hineinführt. Das elektrische Verbindungselement kann beispielsweise ein Bolzen, ein Stift, eine Schraube oder ein sonstiges Verankerungselement sein, das in den elektrisch leitfähigen Schaum eingeschraubt, eingepresst oder auf sonstige Weise eingesetzt wird. Eine Kontaktfläche zwischen dem elektrischen Verbindungselement und dem elektrisch leitfähigen Schaum kann beispielsweise 200 mm² oder mehr groß sein. In jedem der genannten Fälle wird eine einfache und zuverlässige elektrische Kontaktierung des elektrisch leitfähigen Schaums erzielt.

In einer Ausgestaltung ist das elektrische Verbindungselement durch eine Deckschicht des in Sandwichbauweise hergestellten Stegs hindurch in den Kern eingesetzt. Grundsätzlich kann das elektrische Verbindungselement auch parallel zu einer Deckschicht angeordnet sein und von einem seitlichen Rand des Stegs aus in den elektrisch leitfähigen Schaum eingesetzt sein, beispielsweise in einem blattspitzennahen Bereich eines Stegs. Insbesondere zur Verbindung mit weiteren, über die Länge des Rotorblatts verteilt angeordnete Blitzschutzrezeptoren kann durch Hindurchführen des elektrischen Verbindungselements durch eine Deckschicht auf einfache Weise ein zuverlässiger Kontakt zu dem elektrisch leitfähigen Schaum hergestellt werden. Dies kann gegebenenfalls sehr einfach auch nach dem Einbau des Strukturbauteils in das Windenergieanlagenrotorblatt erfolgen.

Die oben genannte Aufgabe wird ebenfalls gelöst durch das Windenergieanlagenrotorblatt mit den Merkmalen des Anspruchs 15. Das Windenergieanlagenrotorblatt weist einen Steg nach einem der Ansprüche 1 bis 14 auf.

Die Erfindung wird nachfolgend anhand eines in vier Figuren dargestellten Ausführungsbeispiels näher erläutert. Es zeigen:
- Fig. 1: einen Steg für ein Windenergieanlagenrotorblatt in einem Querschnitt entlang der Längsrichtung des Stegs,
- Fig. 2: einen Querschnitt durch den Steg aus Fig. 1 in der mit A-A bezeichneten Schnittebene,
- Fig. 3: eine Vergrößerung des blattspitzennahen Bereich des Stegs aus Fig. 1,
- Fig. 4: ein erfindungsgemäßes Windenergieanlagenrotorblatt in einer vereinfachten, perspektivischen Darstellung.

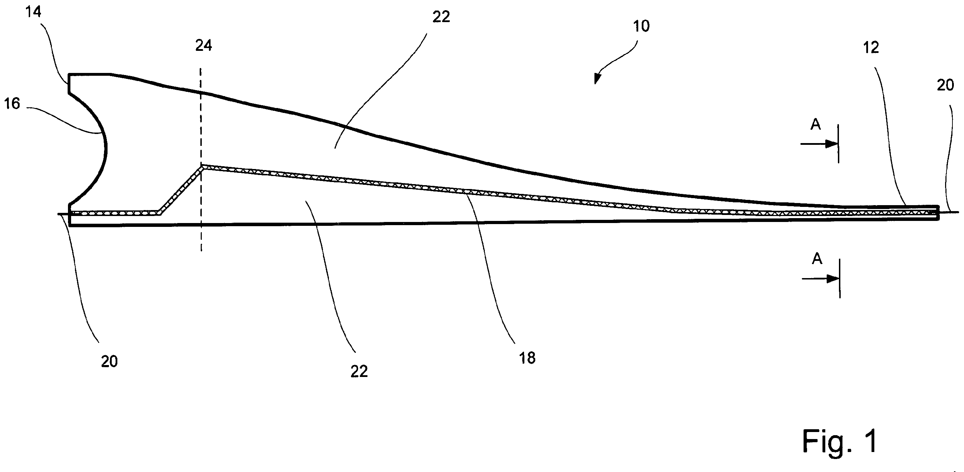

Fig. 1 zeigt ein erfindungsgemäßes Strukturbauteil, nämlich einen Steg 10 für ein Windenergieanlagenrotorblatt. Der Steg 10 weist ein blattspitzenseitiges Ende 12 und ein blattwurzelseitiges Ende 14 auf. Der Steg 10 ist im Wesentlichen plattenförmig, wobei die Höhe des Stegs vom blattspitzenseitigen Ende 12 bis zum blattwurzelseitigen Ende 14 des Stegs 10 zunimmt. Am blattwurzelseitigen Ende 14 weist der Steg 10 eine etwa halbkreisförmige Aussparung 16 auf.

In den Steg 10 integriert ist ein Blitzschutzleiter, der einen elektrisch leitfähigen Schaum 18 aufweist. Der elektrisch leitfähige Schaum 18 verläuft innerhalb des Stegs vom blattwurzelseitigen Ende 14 bis hin zum blattspitzenseitigen Ende 12. Der elektrisch leitfähige Schaum 18 erstreckt sich dabei in Richtung der Höhe des Stegs 10 über eine Strecke von einigen Zentimetern und weist eine im Wesentlichen gleichmäßige Querschnittsfläche über die gesamte Länge des Stegs 10 auf.

Am blattwurzelseitigen Ende 14 und am blattspitzenseitigen Ende 12 ist jeweils ein elektrisches Verbindungselement 20 in den elektrisch leitfähigen Schaum 18 eingesetzt.

Ober- und unterhalb des elektrisch leitfähigen Schaums 18 ist in der in Fig. 1 gezeigten Schnittebene ein herkömmliches Kernmaterial 22, zum Beispiel ein PVC- oder PET-Schaum, angeordnet. Bezogen auf die Höhe des Stegs 10 ist der elektrisch leitfähige Schaum 18 annähernd in der Mitte des Stegs 10 angeordnet, insbesondere in einem Längsabschnitt des Stegs 10, der sich von dem blattspitzenseitigen Ende 12 bis zu einem in einem Abstand vom blattwurzelseitigen Ende 14 befindlichen Längsposition 24 erstreckt. Die Längsposition 24 befindet sich in einem Abstand von ungefähr 15 % der Gesamtlänge des Stegs 10 von dessen blattwurzelseitigem Ende 14. Zwischen dem blattwurzelseitigen Ende 14 und der Längsposition 24 ist der elektrisch leitfähige Schaum 18 näher an einem in der Fig. 1 unten gezeigten Rand des Stegs 10 angeordnet, um am blattwurzelseitigen Ende 12 nahe an einem Umfang des fertigen Rotorblatts über das elektrische Verbindungselement 20 einfach zugänglich zu sein.

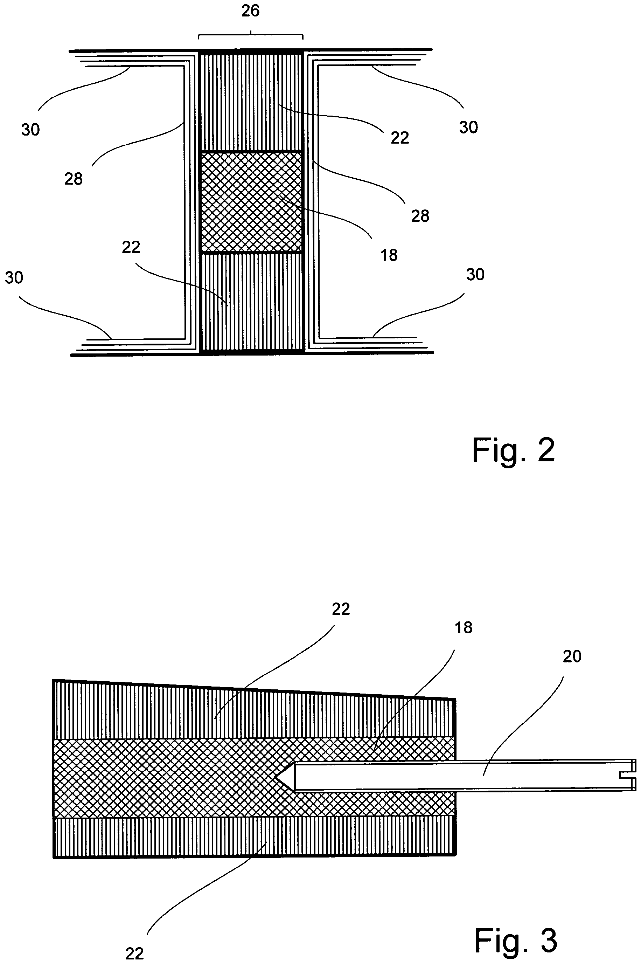

In der Fig. 2 ist ein Querschnitt durch den Steg 10 aus der Fig. 1 in der in Fig. 1 mit A-A bezeichneten Schnittebene dargestellt. Man erkennt, dass der Steg 10 in Sandwichbauweise hergestellt ist aus einem in der Fig. 2 mittig angeordneten Kern 26 und auf beiden Seiten seitlich davon angeordneten Deckschichten 28. Der Kern 26 ist in drei Abschnitte unterteilt, nämlich in den mittig angeordneten, elektrisch leitfähigen Schaum 18 und zwei sich oberhalb bzw. unterhalb daran anschließende Abschnitte aus einem herkömmlichen Kernmaterial 22. Die drei genannten Bestandteile des Kerns 26 weisen alle die gleiche Breite auf, sodass sich die beiden Deckschichten 28 in allen drei Abschnitten des Kerns 26 unmittelbar an die jeweiligen Kernmaterialien anschließen und außen eben sind, sodass der Steg 10 zwei ebene Flachseiten aufweist.

Die beiden Deckschichten 28 bestehen aus einem Laminat aus einem Fasermaterial, beispielsweise aus einem Gelege oder Gewebe oder einer Mischung daraus aus Glasfasern, Kohlenstofffasern, Aramid-Fasern oder sonstigen Fasern oder einer Kombination dieser Fasermaterialien und einer Kunststoffmatrix. Das Fasermaterial ist in die Kunststoffmatrix eingebettet An die Deckschichten 28 schließen sich oben und unten jeweils ebenfalls aus dem Laminat aufgebaute Befestigungsabschnitte 30 an, die von dem Kern 26 weg nach außen weisen, sodass der Steg 10 im Querschnitt insgesamt Doppel-T-förmig ist. Über die Befestigungsabschnitte 30 kann der Steg 10 mit zwei Rotorblatthalbschalen verklebt werden.

Die zwischen den beiden einander gegenüberliegenden Deckschichten 28 angeordnete obere Fläche des Kerns 26 und die zwischen den beiden einander gegenüberliegenden Deckschichten 28 angeordnete untere Fläche des Kerns 26 sind von einer Lage des Fasermaterials überdeckt. Der gesamte Steg 10 ist in einem Vakuuminfusionsverfahren hergestellt worden, bei dem die Deckschichten 28, der elektrisch leitfähige Schaum 18, die herkömmlichen Kernmaterialien 22 und gegebenenfalls weitere Komponenten des Stegs 10 in eine Herstellungsform eingelegt und anschließend mit einem flüssigen Kunststoffmaterial durchtränkt oder umgeben worden sind. Als Herstellungsvarianten kommen auch die Verwendung von Prepregs oder Handlaminat in Frage.

Fig. 3 zeigt eine vergrößerte Darstellung des blattspitzenseitigen Endes 12 des Stegs 10 in einer der Fig. 1 entsprechenden Ansicht. Gut erkennbar ist, dass das elektrische Verbindungselement 20 in den elektrisch leitfähigen Schaum 18 eingesetzt ist. Bei dem elektrisch leitfähigen Verbindungselement 20 handelt es sich um einen Gewindebolzen, der in den elektrisch leitfähigen Schaum 18 eingeschraubt ist. Das freie Ende des elektrischen Verbindungselements 20, das aus dem Strukturbauteil bzw. aus dem elektrisch leitfähigen Schaum 18 heraussteht, kann mit einem an der Blattspitze angeordneten Blitzschutzrezeptor elektrisch leitend verbunden werden, beispielsweise durch Verschrauben oder Verpressen mit einer entsprechenden Verbindungsleitung.

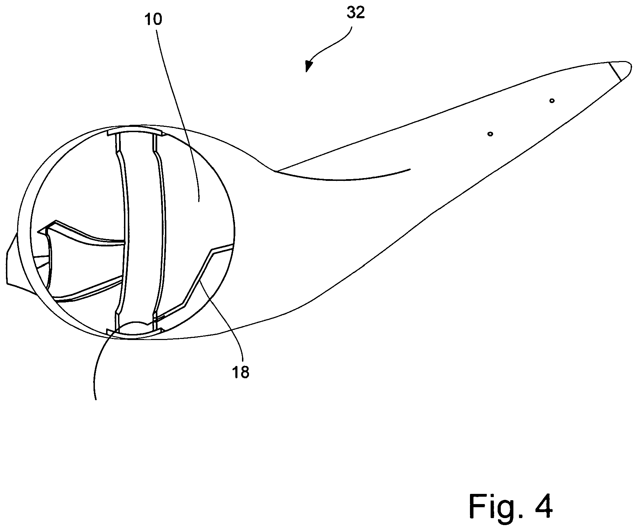

Fig. 4 zeigt ein erfindungsgemäßes Windenergieanlagenrotorblatt 32, in das der Steg 10 aus Fig. 1 eingebaut ist, in einer vereinfachten perspektivischen Darstellung.

### Liste der verwendeten Bezugszeichen

- 10: Steg
- 12: blattspitzenseitiges Ende
- 14: blattwurzelseitiges Ende
- 16: Aussparung
- 18: elektrisch leitfähiger Schaum
- 20: elektrisches Verbindungselement
- 22: Kernmaterial
- 24: Längsposition
- 26: Kern
- 28: Deckschicht
- 30: Befestigungsabschnitt
- 32: Windenergieanlagenrotorblatt

## Patentansprüche

1. Steg (10) für ein Windenergieanlagenrotorblatt, wobei der Steg (10) einen Blitzschutzleiter aufweist, **dadurch gekennzeichnet, dass** der Blitzschutzleiter einen elektrisch leitfähigen Schaum (18) aufweist.

2. Steg (10) nach Anspruch 1, **dadurch gekennzeichnet, dass** der elektrisch leitfähige Schaum (18) in einem Querschnitt quer zu einer Längsrichtung des Stegs (10) eine Fläche von 100 mm² oder mehr aufweist.

3. Steg (10) nach Anspruch 1 oder 2, **dadurch gekennzeichnet, dass** der elektrisch leitfähige Schaum (18) in einer Längsrichtung des Stegs (10) eine elektrische Leitfähigkeit aufweist, die der elektrischen Leitfähigkeit eines massiven Kupferleiters mit einem Querschnitt von 10 mm² oder mehr entspricht.

4. Steg (10) nach einem der Ansprüche 1 bis 3, **dadurch gekennzeichnet, dass** der Steg (10) scheiben- oder plattenförmig ist und zwei einander gegenüberliegende, ebene Flachseiten aufweist.

5. Steg (10) nach einem der Ansprüche 1 bis 4, **dadurch gekennzeichnet, dass** der Steg (10) in Sandwichbauweise aus einem Kern (26) und zwei Deckschichten (28) hergestellt ist, wobei der Kern (26) des Stegs (10) den elektrisch leitfähigen Schaum (18) aufweist.

6. Steg (10) nach Anspruch 5, **dadurch gekennzeichnet, dass** der Kern (26) zusätzlich zu dem elektrisch leitfähigen Schaum (18) mindestens ein weiteres Kernmaterial (22) aufweist.

7. Steg (10) nach Anspruch 5 oder 6, **dadurch gekennzeichnet, dass** der elektrisch leitfähige Schaum (18) in einem Querschnitt durch den Steg (10) mittig angeordnet und allseitig von einer Deckschicht (28) und/oder einem weiteren Kernmaterial (22) umgeben ist.

8. Steg (10) nach einem der Ansprüche 5 bis 7, **dadurch gekennzeichnet, dass** mindestens eine der Deckschichten (28) ein faserverstärktes Kunststoffmaterial aufweist.

9. Steg (10) nach Anspruch 8, **dadurch gekennzeichnet, dass** der elektrisch leitfähige Schaum (18) und das faserverstärkte Kunststoffmaterial in eine Kunststoffmatrix eingebettet sind.

10. Steg (10) nach einem der Ansprüche 1 bis 9, **dadurch gekennzeichnet, dass** sich der elektrisch leitfähige Schaum (18) bei bestimmungsgemäßer Verwendung des Stegs (10) von einem Bereich nahe einer Blattwurzel des Rotorblatts bis zu einem Bereich nahe einer Blattspitze des Rotorblatts erstreckt.

11. Steg (10) nach einem der Ansprüche 1 bis 10, **dadurch gekennzeichnet, dass** der elektrisch leitfähige Schaum (18) ein aufgeschäumtes Metall aufweist.

12. Steg nach einem der Ansprüche 1 bis 11, **dadurch gekennzeichnet, dass** ein elektrisches Verbindungselement (20) in den elektrisch leitfähigen Schaum (18) eingesetzt ist.

13. Steg nach Anspruch 12, **dadurch gekennzeichnet, dass** das elektrische Verbindungselement (20) durch eine Deckschicht (28) des in Sandwichbauweise hergestellten Stegs (10) hindurch in den Kern (26) eingesetzt ist.

14. Windenergieanlagenrotorblatt mit einem Steg (10) nach einem der Ansprüche 1 bis 13.

## Claims

1. A shear web (10) for a wind turbine rotor blade, wherein the shear web (10) has a lightning conductor, **characterized in that** the lightning conductor has an electrically conductive foam (18).

2. The shear web (10) according to claim 1, **characterized in that** the electrically conductive foam (18), in a cross-section transverse to a longitudinal direction of the shear web (10), has a cross-sectional area of 100 mm² or more.

3. The shear web (10) according to claim 1 or 2, **characterized in that** the electrically conductive foam (18) in a longitudinal direction of the shear web (10) has an electrical conductivity, which corresponds to the electrical conductivity of a massive copper conductor with a cross-section of 10 mm² or more.

4. The shear web (10) according to one of claims 1 to 3, **characterized in that** the shear web (10) is shaped like a disk or plate and has two even flat sides which are opposite one another.

5. The shear web (10) according to one of claims 1 to 4, **characterized in that** the shear web (10) is produced in a sandwich construction made of a core (26) and two cover layers (28), wherein the core (26) of the shear web (10) has an electrically conductive foam (18).

6. The shear web (10) according to claim 5, **characterized in that** the core (26), in addition to the electrically conductive foam (18), has at least one additional core material (22).

7. The shear web (10) according to claim 5 or 6, **characterized in that** the electrically conductive foam (18) in a cross-section through the shear web (10) is arranged centered and is surrounded on all sides by a cover layer (28) and/or a further core material (22).

8. The shear web (10) according to one of claims 5 to 7, **characterized in that** at least one of the cover layers (28) has a fiber-reinforced plastic material.

9. The shear web (10) according to claim 8, **characterized in that** the electrically conductive foam (18) and the fiber-reinforced plastic material are embedded in a plastic matrix.

10. The shear web (10) according to one of claims 1 to 9, **characterized in that** the electrically conductive foam (18), in the case of the proper use of the shear web (10), extends from an area near a blade root of the rotor blade up to an area near a blade tip of the rotor blade.

11. The shear web (10) according to one of claims 1 to 10, **characterized in that** the electrically conductive foam (18) has a foamed metal.

12. The shear web according to one of claims 1 to 11, **characterized in that** an electrical connection element (20) is inserted into the electrically conductive foam (18).

13. The shear web according to claim 12, **characterized in that** the electrical connection element (20) is inserted into the core (26) through a cover layer (28) of the shear web (10) produced in a sandwich construction.

14. A wind turbine rotor blade with a shear web (10) according to one of claims 1 to 13.

## Revendications

1. Ame (10) pour une pale de rotor d'éolienne, l'âme (10) présentant un conducteur de paratonnerre, **caractérisée en ce que** le conducteur de paratonnerre présente une mousse (18) électriquement conductrice.

2. Ame (10) selon la revendication 1, **caractérisée en ce que** la mousse (18) électriquement conductrice présente, dans une section transversale transversalement à une direction longitudinale de l'âme (10), une surface de 100 mm² ou plus.

3. Ame (10) selon la revendication 1 ou 2, **caractérisée en ce que** la mousse (18) électriquement conductrice présente, dans une direction longitudinale de l'âme (10), une conductibilité électrique qui correspond à la conductibilité électrique d'un conducteur en cuivre plein d'une section transversale de 10 mm² ou plus.

4. Ame (10) selon l'une des revendications 1 à 3, **caractérisée en ce que** l'âme (10) est en forme de disque ou de plaque et présente deux côtés plats opposés l'un à l'autre.

5. Ame (10) selon l'une des revendications 1 à 4, **caractérisée en ce que** l'âme (10) est fabriquée en structure sandwich à partir d'un noyau (26) et de deux couches de couverture (28), le noyau (26) de l'âme (10) présentant la mousse (18) électriquement conductrice.

6. Ame (10) selon la revendication 5, **caractérisée en ce que**, en plus de la mousse (18) électriquement conductrice, le noyau (26) présente au moins un autre matériau de noyau (22).

7. Ame (10) selon la revendication 5 ou 6, **caractérisée en ce que** la mousse (18) électriquement conductrice est disposée de façon centrée dans une section transversale à travers l'âme (10) et est entourée de tous côtés par une couche de couverture (28) et/ou d'un autre matériau de noyau (22).

8. Ame (10) selon l'une des revendications 5 à 7, **caractérisée en ce qu'**au moins une des couches de couverture (28) présente une matière plastique renforcée par des fibres.

9. Ame (10) selon la revendication 8, **caractérisée en ce que** la mousse (18) électriquement conductrice et la matière plastique renforcée par des fibres sont noyées dans une matrice en matière plastique.

10. Ame (10) selon l'une des revendications 1 à 9, **caractérisée en ce que**, en cas d'utilisation conforme de l'âme (10), la mousse (18) électriquement conductrice s'étend d'une zone proche d'un pied de pale de la pale de rotor jusqu'à une zone proche d'une pointe de pale de la pale de rotor.

11. Ame (10) selon l'une des revendications 1 à 10, **caractérisée en ce que** la mousse (18) électriquement conductrice présente un mousse métallique.

12. Ame selon l'une des revendications 1 à 11, **caractérisée en ce qu'**un élément de raccordement électrique (20) est introduit dans la mousse (18) électriquement conductrice.

13. Ame selon la revendication 12, **caractérisée en ce que** l'élément de raccordement électrique (20) est introduit dans le noyau (26) à travers une couche de couverture (28) de l'âme (10) fabriqué en structure sandwich.

14. Pale de rotor d'éolienne avec une âme (10) selon l'une des revendications 1 à 13.
